# EUROPEAN PATENT APPLICATION

(11) **EP 3 109 876 A1**
(43) Date of publication of application: **28.12.2016**
(21) Application number: 15751980.2
(22) Date of filing: 09.02.2015
(51) Int. Cl.: H01G 11/32, H01G 11/06, H01G 11/24, H01G 11/62, H01M 10/44, H02J 7/00

(54) **STORAGE DEVICE AND CHARGING/DISCHARGING DEVICE**

(30) Priority: 18.02.2014 JP 2014028761
(71) Applicant: Sumitomo Electric Industries, Ltd., Osaka-shi, Osaka 541-0041 (JP)
(72) Inventor: MAJIMA, Masatoshi, Itami-shi Hyogo 664-0016 (JP); OKUNO, Kazuki, Itami-shi Hyogo 664-0016 (JP)
(74) Representative: Boult Wade Tennant
(86) International application number: PCT/JP2015/053521
(87) International publication number: WO 2015/125647

(57) **Abstract**

An electricity storage device includes a positive electrode containing a positive electrode active material, a negative electrode containing a negative electrode active material, a separator disposed between the positive electrode and the negative electrode, and an electrolyte. The electrolyte contains anions and cations. The cations include at least lithium ions. The positive electrode active material includes a first carbonaceous material and a second carbonaceous material. The first carbonaceous material realizes a capacity by means of a first reaction in which the anions are adsorbed and desorbed. The second carbonaceous material realizes a capacity by means of a second reaction in which the anions are intercalated and deintercalated.

## Description

### Technical Field

The present invention relates to an electricity storage device in which at least two carbonaceous materials are used as a positive electrode active material, and a charge/discharge system including an electricity storage device.

### Background Art

With environmental problems being highlighted, systems for converting clean energy, such as sunlight or wind power, into electric power and storing the electric power as electric energy have been actively developed. Known examples of such electricity storage devices include lithium ion secondary batteries, electric double layer capacitors, and lithium ion capacitors. Recently, attention has been paid to capacitors, such as electric double layer capacitors and lithium ion capacitors, from the viewpoint of excellent instantaneous charge-discharge properties, being able to obtain high output characteristics, and ease of handling.

In the positive electrode of a capacitor, activated carbon is generally used as a positive electrode active material. Since activated carbon rapidly adsorbs and desorbs ions (in particular, anions) in an electrolyte, high output characteristics can be obtained. However, a high capacity is unlikely to be obtained.

Patent Literature 1 proposes use of an activated carbon 20% to 30% of which is made up of mesopores in a lithium ion capacitor in order to facilitate adsorption and desorption of lithium ions.

### Citation List

### Patent Literature

PTL 1: Japanese Unexamined Patent Application Publication No. 2013-157603

### Summary of Invention

### Technical Problem

The positive electrode active material, such as activated carbon, that adsorbs and desorbs anions in an electrolyte produces charging and discharging reactions through non-Faradaic reactions. Therefore, although excellent output characteristics can be exhibited, it is difficult to obtain a high capacity. Even when the pore size of activated carbon is controlled as in Patent Literature 1, the charging and discharging reaction mechanism is the same, and therefore it is difficult to increase the capacity of the capacitor.

Accordingly, it is an object to provide an electricity storage device in which excellent output characteristics can be exhibited and a high capacity can be obtained, and a charge/discharge system using an electricity storage device.

### Solution to Problem

An aspect of the present invention relates to an electricity storage device including a positive electrode containing a positive electrode active material, a negative electrode containing a negative electrode active material, a separator disposed between the positive electrode and the negative electrode, and an electrolyte,
wherein the electrolyte contains anions and cations,
the cations include at least lithium ions,
the positive electrode active material includes a first carbonaceous material and a second carbonaceous material,
the first carbonaceous material realizes a capacity by means of a first reaction in which the anions are adsorbed and desorbed,
the second carbonaceous material realizes a capacity by means of a second reaction in which the anions are intercalated and deintercalated.

Another aspect of the present invention relates to a charge/discharge system including an electricity storage device, a charge control unit that controls charging of the electricity storage device, and a discharge control unit that controls discharging of the electricity storage device,
wherein the electricity storage device includes a positive electrode containing a positive electrode active material, a negative electrode containing a negative electrode active material, a separator disposed between the positive electrode and the negative electrode, and an electrolyte,
the electrolyte contains anions and cations,
the cations include at least lithium ions,
the positive electrode active material includes a first carbonaceous material and a second carbonaceous material,
the first carbonaceous material realizes a capacity by means of a first reaction in which the anions are adsorbed and desorbed,
the second carbonaceous material realizes a capacity by means of a second reaction in which the anions are intercalated and deintercalated,
in the charge control unit, at least a first upper-limit voltage V₁ and a second upper-limit voltage V₂ are set, the second upper-limit voltage V₂ being larger than the first upper-limit voltage V₁,
90% or more of the capacity obtained at voltages equal to or less than the first upper-limit voltage V₁ is obtained by the first reaction, and
90% or more of the capacity obtained at voltages in a range of more than the first upper-limit voltage V₁ and equal to or less than the second upper-limit voltage V₂ is obtained by the second reaction.

### Advantageous Effects of Invention

In the above-described aspects of the present invention, the electricity storage device can be charged to a high voltage while securing high output characteristics pertaining to a capacitor, and therefore, the capacity can be increased. Brief Description of Drawings

[Fig. 1] Figure 1 is a schematic longitudinal sectional view showing an electricity storage device according to an embodiment of the present invention.
[Fig. 2] Figure 2 is a schematic diagram showing a charge/discharge system according to an embodiment of the present invention.

### Description of Embodiments

### [Description of embodiments of the invention]

First, contents of embodiments of the present invention will be enumerated and described.

An embodiment of the present invention relates to (1) an electricity storage device including a positive electrode containing a positive electrode active material, a negative electrode containing a negative electrode active material, a separator disposed between the positive electrode and the negative electrode, and an electrolyte,
wherein the electrolyte contains anions and cations,
the cations include at least lithium ions,
the positive electrode active material includes a first carbonaceous material and a second carbonaceous material,
the first carbonaceous material realizes a capacity by means of a first reaction in which the anions are adsorbed and desorbed,
the second carbonaceous material realizes a capacity by means of a second reaction in which the anions are intercalated and deintercalated.

Since the positive electrode active material includes the first carbonaceous material, anions can be rapidly adsorbed and desorbed in the first reaction, and high output characteristics can be obtained. On the other hand, since charging and discharging reactions involving adsorption and desorption of anions are non-Faradaic reactions, it is difficult to increase the capacity of the electricity storage device. In the embodiment of the present invention, since the positive electrode active material further includes the second carbonaceous material, a capacity can be realized by intercalating and deintercalating anions in the second reaction. Such a second reaction of the second carbonaceous material and anions is a Faradaic reaction, and therefore, it is possible to increase the capacity of the electricity storage device.

In such a manner, the electricity storage device performs charging and discharging, using the first reaction of the first carbonaceous material and the second reaction of the second carbonaceous material. A high output pertaining to a capacitor can be obtained by the first reaction, and a high capacity comparable to that of a lithium ion battery can be obtained by the second reaction.
(2) Preferably, the positive electrode contains a positive electrode mixture containing the positive electrode active material, the content of the positive electrode active material in the positive electrode mixture is 80% by mass or more, and the mass ratio of the first carbonaceous material to the second carbonaceous material is 10/90 to 70/30. In such a positive electrode, the characteristics of the two carbonaceous materials are easily exhibited. Therefore, the high output and the high capacity can be more easily secured.
(3) The first carbonaceous material preferably contains activated carbon. Activated carbon has a large specific surface area and excellent anion adsorption and desorption properties. Therefore, the high output can be more easily secured.
(4) The second carbonaceous material preferably contains a graphite material having an average particle diameter of 10 μm or less. Such a graphite material has a layered graphite crystal structure and is capable of intercalating and deintercalating anions into and from the interlayer spaces, and therefore, the effect of increasing the capacity of the electricity storage device is enhanced. Furthermore, because of excellent anion intercalation and deintercalation properties, the output characteristics can be further enhanced.
(5) The second carbonaceous material preferably contains nanoporous carbon having a specific surface area of 800 to 2,500 m²/g. Since such nanoporous carbon has excellent anion intercalation and deintercalation properties, the capacity can be further improved.
(6) The anions are preferably at least one member selected from the group consisting of a fluorine-containing phosphate anion, a fluorine-containing borate anion, and a bis(sulfonyl)amide anion. Since the second carbonaceous material has high intercalation and deintercalation properties with such anions, the effect of increasing the capacity of the electricity storage device is further enhanced.
(7) Another embodiment of the present invention relates to a charge/discharge system including an electricity storage device, a charge control unit that controls charging of the electricity storage device, and a discharge control unit that controls discharging of the electricity storage device,
   wherein the electricity storage device includes a positive electrode containing a positive electrode active material, a negative electrode containing a negative electrode active material, a separator disposed between the positive electrode and the negative electrode, and an electrolyte,
   the electrolyte contains anions and cations,
   the cations include at least lithium ions,
   the positive electrode active material includes a first carbonaceous material and a second carbonaceous material,
   the first carbonaceous material realizes a capacity by means of a first reaction in which the anions are adsorbed and desorbed,
   the second carbonaceous material realizes a capacity by means of a second reaction in which the anions are intercalated and deintercalated,
   in the charge control unit, at least a first upper-limit voltage V₁ and a second upper-limit voltage V₂ are set, the second upper-limit voltage V₂ being larger than the first upper-limit voltage V₁,
   90% or more of the capacity obtained at voltages equal to or less than the first upper-limit voltage V₁ is obtained by the first reaction, and
   90% or more of the capacity obtained at voltages in a range of more than the first upper-limit voltage V₁ and equal to or less than the second upper-limit voltage V₂ is obtained by the second reaction.
   In such a charge/discharge system, a high output can be obtained by the first reaction, and a high capacity can be obtained by the second reaction.
(8) In the charge/discharge system, preferably, the first upper-limit voltage V₁ is 3.5 to 4.4 V, and the second upper-limit voltage V₂ is 4 to 6 V. In such a charge/discharge system, since the voltage is high, a higher capacity can be obtained. Therefore, it is also possible to decrease the number of cells when a system is fabricated.
(9) In a preferred embodiment, the charge control unit charges the electricity storage device with a first charging current I_{c1} at a voltage that is equal to or less than the first upper-limit voltage V₁, and with a second charging current I_{c2} at a voltage that is more than the first upper-limit voltage V₁ and equal to or less than the second upper-limit voltage V₂, the first charging current I_{c1} being larger than the second charging current I_{c2}; and
   the discharge control unit discharges the electricity storage device with a first discharging current I_{d1} at a voltage that is equal to or less than the first upper-limit voltage V₁, and with a second discharging current I_{d2} at a voltage that is more than the first upper-limit voltage V₁ and equal to or less than the second upper-limit voltage V₂, the first discharging current I_{d1} being larger than the second discharging current I_{d2}.

In such an embodiment, it is possible to further enhance the effect of improving output characteristics. Furthermore, since charging and discharging can be performed at current values appropriate for the first carbonaceous material and the second carbonaceous material, it is possible to enhance cycle characteristics.

### [Detailed description of embodiments of the invention]

Specific examples of the electricity storage device and the charge/discharge system including the electricity storage device according to embodiments of the present invention will be described below with reference to the drawings as necessary. The present invention is not limited to the examples, but is determined by appended claims. The present invention is intended to embrace equivalents of the scope of the claims and all modifications within the scope of the claims.

### (Electricity storage device)

An electricity storage device includes a positive electrode, a negative electrode, a separator disposed between the positive electrode and the negative electrode, and an electrolyte.

Constituent elements of the electricity storage device will be described in more detail below.

### (Positive electrode)

The positive electrode contains a positive electrode active material. In the embodiment of the present invention, a positive electrode active material including a first carbonaceous material and a second carbonaceous material is used. The first carbonaceous material and the second carbonaceous material have different reaction mechanisms with anions contained in the electrolyte. The first carbonaceous material initiates a non-Faradaic reaction with anions, and the second carbonaceous material initiates a Faradaic reaction with anions. The positive electrode is not particularly limited as long as it contains such a positive electrode active material, and may include a positive electrode current collector and the positive electrode active material (or a positive electrode mixture containing the positive electrode active material) carried on the positive electrode current collector.

### (First carbonaceous material)

The first carbonaceous material realizes a capacity by means of a first reaction (i.e., non-Faradaic reaction) in which at least anions among anions and cations contained in the electrolyte are adsorbed and desorbed. The first carbonaceous material may adsorb and desorb cations depending on the potential of the positive electrode in some cases. A carbonaceous material that adsorbs and desorbs both anions and cations is also included in the first carbonaceous material.

The first carbonaceous material preferably contains activated carbon. As the activated carbon, known activated carbon used in capacitors can be used. Examples of a raw material for activated carbon include wood; coconut shells; spent liquor; coal or coal pitch obtained by thermal cracking of coal; heavy oil or petroleum pitch obtained by thermal cracking of heavy oil; and/or phenolic resins. The activated carbon is preferably subjected to activation treatment.

The average particle diameter of the activated carbon is not particularly limited, but is preferably 20 μm or less and more preferably 3 to 15 µm.

In this description, the average particle diameter means the median diameter in the volume-based particle size distribution obtained by laser diffraction particle size analysis.

The specific surface area (BET specific surface area) of the activated carbon is not particularly limited, but is preferably 800 to 3,000 m²/g and more preferably 1,500 to 3,000 m²/g. When the specific surface area is within such a range, the electrostatic capacity of the electricity storage device is advantageously increased and the internal resistance is likely to be decreased. Furthermore, a higher output is likely to be obtained.

One first carbonaceous material may be used alone, or two or more first carbonaceous materials having different raw materials, average particle diameters and/or specific surface areas may be combined for use.

The content of the activated carbon in the first carbonaceous material is, for example, 80% to 100% by mass, and preferably 90% to 100% by mass. The case where the first carbonaceous material is constituted by the activated carbon only is also preferable.

### (Second carbonaceous material)

The second carbonaceous material realizes a capacity by means of a second reaction (i.e., Faradaic reaction) in which the anions contained in the electrolyte are intercalated and deintercalated. Examples of such a second carbonaceous material include carbon materials having a graphite crystal structure (also referred to as "graphite materials") and porous carbon having pores. These second carbonaceous materials may be used alone or in combination of two or more. The second carbonaceous material may be subjected to activation treatment or may not be subjected to activation treatment.

The graphite crystal structure in graphite materials means a layered crystal structure and is, for example, a cubic crystal structure or a rhombohedral crystal structure. Examples of the graphite material include natural graphite (e.g., flaky graphite), synthetic graphite, and graphitized mesocarbon microbeads. These graphite materials may be used alone or in combination of two or more.

The average interplanar spacing d₀₀₂ of a (002) plane measured by an X-ray diffraction (XRD) spectrum of the graphite material is used as an index of the degree of the development of the graphite crystal structure in the graphite material. The graphite material preferably has an average interplanar spacing d₀₀₂ of less than 0.337 nm. The lower limit of the average interplanar spacing d₀₀₂ is not particularly limited, but the average interplanar spacing d₀₀₂ can be set, for example, at 0.335 nm or more. By using a graphite material whose average interplanar spacing d₀₀₂ is within such a range, anions can be more efficiently intercalated into the graphite crystal structure during charging and can be smoothly deintercalated from the graphite crystal structure during discharging.

The average particle diameter of the graphite material is, for example, 15 μm or less (e.g., 1 to 15 µm), preferably 10 μm or less (e.g., 1 to 10 µm), and more preferably 2 to 8 µm. When the average particle diameter of the graphite material is within such a range, because of excellent anion intercalation and deintercalation properties, the output characteristics can be further enhanced while maintaining the capacity.

The specific surface area (BET specific surface area) of the graphite material is, for example, 1 to 100 m²/g, preferably 5 to 50 m²/g, and more preferably 10 to 40 m²/g. When the specific surface area of the graphite material is within such a range, intercalation and deintercalation of ions occur smoothly, which is further advantageous in improving the output while securing a high capacity.

Porous carbon has pores, such as nanopores, mesopores, and/or micropores. The pore size is preferably on the order of subnanometer to submicron, and porous carbon having pores on the order of subnanometer to submicron is referred to as "nanoporous carbon". The second carbonaceous material preferably contains nanoporous carbon.

The pore size of the nanoporous carbon is preferably 0.1 to 100 nm, and more preferably 0.1 to 50 nm or 0.1 to 20 nm. In the volume-based pore diameter distribution of the nanoporous carbon, for example, the percentage of pores having a pore diameter of 0.1 to 50 nm is preferably 80% or more (e.g., 80% to 100%) and more preferably 90% to 100% relative to the volume of all pores. Since the nanoporous carbon has many such pores, it has high anion intercalation and deintercalation properties, and the second reaction can be performed efficiently.

The nanoporous carbon may be amorphous or contain minute crystallites (for example, crystallites with a size of 10 nm or less).

As the nanoporous carbon, for example, a nanoporous carbon obtained by heating a metal carbide, such as silicon carbide or titanium carbide, in an atmosphere containing chlorine gas may be used. By controlling the heating temperature and heating time, the pore diameter, the pore depth, and/or the percentage of the pores can be adjusted. The heating temperature can be selected, for example, from the range of 1,000°C to 2,000°C, and may be 1,000°C to 1,500°C.

The specific surface area (BET specific surface area) of the nanoporous carbon is, for example, 800 to 2,500 m²/g, preferably 900 to 2,000 m²/g, and more preferably 1,000 to 1,800 m²/g. When a nanoporous carbon whose specific surface area is within such a range is used, the anion intercalation and deintercalation properties can be further enhanced.

The total content of the graphite material and the nanoporous carbon in the second carbonaceous material is preferably 80% to 100% by mass, and more preferably 90% to 100% by mass. The second carbonaceous material may be constituted by the graphite material and/or the nanoporous carbon only.

From the viewpoint of anion intercalation and deintercalation properties, the second carbonaceous material preferably contains at least the graphite material.

In the positive electrode active material, the mass ratio of the first carbonaceous material to the second carbonaceous material (= first carbonaceous material/second carbonaceous material) may be appropriately selected according to the intended use and purpose of the electricity storage device and the like. The mass ratio is, for example, 10/90 or more, and is preferably 20/80 or more. The mass ratio is preferably 70/30 or less, and more preferably 65/35 or less. These lower limits and upper limits can be combined arbitrarily. The mass ratio may be 10/90 to 70/30, or 20/80 to 70/30. When the mass ratio is within such a range, the characteristics of both the first and second carbonaceous materials are likely to be exhibited, which is more advantageous in securing a high output and a high capacity.

Since the positive electrode active material includes both the first and second carbonaceous materials, during charging, at least anions are adsorbed to the first carbonaceous material by the first reaction and/or anions are intercalated into the second carbonaceous material by the second reaction. Furthermore, during discharging, in the positive electrode, at least anions are desorbed from the first carbonaceous material by the first reaction and/or anions are deintercalated from the second carbonaceous material by the second reaction. There is often a difference between the voltage range in which the first reaction takes place and the voltage range in which the second reaction takes place. Accordingly, during normal operation of the electricity storage device, one of the first and second reactions may be mainly used, and as necessary, the other reaction may be occasionally used. For example, during normal operation of the electricity storage device, the capacitor-like first reaction may be mainly used, and in the case where a high capacity is required, the battery-like second reaction may be mainly used.

The positive electrode mixture contains the positive electrode active material as an essential component and may contain a conductive assistant and/or a binder as an optional component.

The type of conductive assistant is not particularly limited. Examples thereof include carbon black, such as acetylene black and Ketjen black; conductive compounds, such as ruthenium oxide; and conductive fibers, such as carbon fibers and metal fibers. These conductive assistants may be used alone or in combination of two or more. The amount of the conductive assistant is, for example, 0.1 to 15 parts by mass, and preferably 0.5 to 10 parts by mass, relative to 100 parts by mass of the positive electrode active material.

The type of binder is not particularly limited. Examples of the binder that can be used include fluororesins, such as polyvinylidene fluoride (PVDF) and polytetrafluoroethylene; chlorine-containing vinyl resins, such as polyvinyl chloride; polyolefin resins; rubber-like polymers, such as styrene-butadiene rubber; polyvinylpyrrolidone; polyvinyl alcohol; and cellulose derivatives [e.g., cellulose ethers (carboxyalkyl celluloses and alkali metal salts or ammonium salts thereof, such as carboxymethyl cellulose and sodium salts thereof)]. These binders may be used alone or in combination of two or more. The amount of the binder is not particularly limited. From the viewpoint of easily securing a high binding property and a high capacity, the amount of the binder can be, for example, selected from the range of about 0.1 to 15 parts by mass, and is preferably 0.5 to 10 parts by mass, relative to 100 parts by mass of the positive electrode active material.

The content of the positive electrode active material in the positive electrode mixture is, for example, preferably 80% by mass or more, and more preferably 85% by mass or more or 90% by mass or more. When the content of the positive electrode active material is within such a range, this is more advantageous in terms of increasing the output and capacity of the positive electrode.

The positive electrode current collector is preferably made of aluminum and/or an aluminum alloy (an aluminum-iron alloy, an aluminum-copper alloy, or the like).

The positive electrode current collector may be a metal foil, but is preferably a metal porous body from the viewpoint of increasing the capacity of the electricity storage device. Although a porous metal foil may be used as the metal porous body, it is preferable to use a metal porous body having a three-dimensional network skeleton. The metal porous body having a three-dimensional network skeleton may be a porous body made of a metal (specifically, aluminum or an aluminum alloy) and having a three-dimensional network skeleton in which a plurality of fibrous portions (or rod-shaped portions) are three-dimensionally connected to each other.

The metal porous body having a three-dimensional network skeleton can be formed by coating a porous body made of a resin and having continuous voids (a resin foamed body, a nonwoven fabric made of a resin, or the like) with a metal (specifically, aluminum and/or an aluminum alloy) that constitutes the current collector, for example, by plating treatment or the like. The resin in the skeleton is desirably decomposed or dissolved by heat treatment or the like and removed.

The resulting metal porous body has many cell-like pores, corresponding to the shape of the resin foamed body, and has continuous voids (i.e., interconnected pores) in which the cell-like pores are connected to each other. More specifically, preferably, the metal porous body includes a plurality of fibrous portions, and the fibrous portions form cell-like pores and are three-dimensionally connected to each other to form a three-dimensional network skeleton. The skeleton has a plurality of cell-like pores surrounded by the connected fibrous portions, and substantially polygonal apertures (or windows) are normally formed between the adjacent pores. The apertures interconnect the adjacent pores, and thus, the metal porous body has continuous voids.

In a preferred embodiment, the metal porous body having a three-dimensional network skeleton has a hollow space inside the skeleton (i.e., the inside is hollow) as a result of removal of the resin porous body. The hollow space inside the skeleton of the metal porous body may have a shape of interconnected pores. Such a skeleton has a tunnel-like shape or a tubular shape. The metal porous body having a hollow skeleton has a bulky three-dimensional structure, but is very lightweight. The width of the hollow space inside the skeleton is, for example, 0.5 to 5 μm and preferably 1 to 4 μm or 2 to 3 μm on average.

In the positive electrode, the distribution of the first carbonaceous material and the second carbonaceous material may be uniform or non-uniform. A positive electrode in which the distribution is non-uniform may include, for example, two or three or more layers having different mass ratios of the first carbonaceous material to the second carbonaceous material. For example, a layer in which the mass ratio of the first carbonaceous material to the second carbonaceous material is 50/50 to 100/0 may be formed on the surface (or in the vicinity of the surface) of the positive electrode, and a layer in which the mass ratio is 0/100 or more and less than 50/50 may be formed inside the positive electrode. More specifically, in the case where a metal porous body having a three-dimensional network structure is used as the positive electrode current collector, a layer containing a large amount of the second carbonaceous material (for example, using a positive electrode active material including the second carbonaceous material only) may be formed inside, and a layer containing a large amount of the first carbonaceous material (for example, using a positive electrode active material including the first carbonaceous material only) may be formed on the surface side. By forming a layer having a high content of the first carbonaceous material on the surface side of the positive electrode, a high output is further easily obtained.

The positive electrode is formed by placing a positive electrode active material or a positive electrode mixture on the positive electrode current collector. Specifically, the positive electrode is obtained by coating or filling the positive electrode current collector with the positive electrode mixture, followed by drying, and as necessary, compressing (or rolling) the dried product in the thickness direction. The positive electrode mixture is normally used in the form of a slurry containing constituent components of the positive electrode mixture and a dispersion medium. As the dispersion medium, for example, an organic solvent, such as N-methyl-2-pyrrolidone (NMP) and/or water or the like is used. The dispersion medium is removed by drying in the production process of the positive electrode (e.g., after coating or filling the current collector with the slurry and/or after performing rolling).

The thickness of the positive electrode may be appropriately selected, for example, from the range of 50 to 2,000 µm. In the case where a metal foil is used as the positive electrode current collector, the thickness of the positive electrode is, for example, 50 to 500 μm or 50 to 300 µm. In the case where a three-dimensional network metal porous body is used as the positive electrode current collector, the thickness of the positive electrode is, for example, 500 to 2,000 µm, and preferably 700 to 1,500 µm.

### (Negative electrode)

The negative electrode contains a negative electrode active material. The negative electrode may include a negative electrode current collector and the negative electrode active material (or a negative electrode mixture containing the negative electrode active material) carried on the negative electrode current collector.

As the material for the negative electrode current collector, copper, a copper alloy, nickel, a nickel alloy, stainless steel, or the like is preferable.

The negative electrode current collector may be a metal foil, but is preferably a metal porous body from the viewpoint of increasing the capacity of the electricity storage device. The metal porous body is preferably a metal porous body having a three-dimensional network skeleton (in particular, a hollow skeleton) as in the positive electrode current collector. The porosity, the average pore diameter, the width of the hollow space inside the skeleton, the specific surface area, and the like of the metal porous body can be appropriately selected from the ranges exemplified for the metal porous body of the positive electrode current collector. The metal porous body serving as the negative electrode current collector can be fabricated as in the case of the positive electrode current collector except for using the material described above instead of aluminum or an aluminum alloy when the resin porous body is coated with a metal.

The negative electrode active material is preferably a material that intercalates and deintercalates cations (in particular, at least lithium ions) contained in the electrolyte, i.e., a material that causes charging and discharging by means of Faradaic reactions.

Examples of such a material include a carbonaceous material (third carbonaceous material) that intercalates and deintercalates lithium ions, lithium titanium oxide (spinel lithium titanium oxide such as lithium titanate), silicon oxide, silicon alloys, tin oxide, and tin alloys. Examples of the third carbonaceous material include graphitizable carbon (soft carbon), non-graphitizable carbon (hard carbon), and graphite (a carbon material having a graphite crystal structure, such as synthetic graphite or natural graphite). These materials may be used alone or in combination of two or more. The negative electrode active material preferably has a theoretical capacity of 300 mAh/g or more. Among the negative electrode active material, the third carbonaceous material is preferable, and in particular, graphite and/or hard carbon is preferable.

The content of the third carbonaceous material in the negative electrode active material is preferably 80% to 100% by mass, and may be 90% to 100% by mass. In particular, the content of graphite and/or hard carbon in the negative electrode active material is preferably within such a range. The case where the negative electrode active material includes the third carbonaceous material (in particular, graphite and/or hard carbon) only is also preferable.

The negative electrode active material is preferably pre-doped with lithium in order to decrease the potential of the negative electrode. Thereby, the voltage of the electricity storage device is increased, which is more advantageous in increasing the capacity of the electricity storage device. Note that, in order to suppress precipitation of lithium, the negative electrode capacity is preferably set to be larger than the positive electrode capacity.

The doping with lithium can be performed by a known method. The doping with lithium may be performed during the assembly of the electricity storage device. For example, a metallic lithium foil, together with the positive electrode, the negative electrode, and a nonaqueous electrolyte, is placed in an electricity storage device container, and by maintaining the electricity storage device which has been assembled in a thermostatic chamber at about 60°C, lithium ions can be dissolved out of the lithium metal foil and doped into the negative electrode active material.

The negative electrode is obtained, for example, as in the case of the positive electrode, by coating or filling the negative electrode current collector with a negative electrode mixture slurry containing the negative electrode active material, followed by drying, and compressing (or rolling) the dried product in the thickness direction. Furthermore, the negative electrode may be obtained by forming a deposition film of the negative electrode active material by a gas phase method, such as vapor deposition or sputtering, on the surface of the negative electrode current collector.

The negative electrode mixture slurry may contain, in addition to the negative electrode active material, a binder and/or a conductive assistant or the like. The dispersion medium, the binder, and the conductive assistant each can be appropriately selected from those exemplified for the positive electrode mixture. The amount of the binder or the conductive assistant relative to 100 parts by mass of the negative electrode active material can be appropriately selected from the ranges exemplified for the amount of the binder or the conductive assistant relative to 100 parts by mass of the positive electrode active material.

The thickness of the negative electrode can be appropriately selected from the same range as that for the positive electrode.

### (Separator)

The separator has ion permeability and is disposed between the positive electrode and the negative electrode, thereby physically separating the electrodes to prevent short-circuiting. The separator has a porous structure, and by holding an electrolyte in its pores, ions are permeated. As the material for the separator, for example, a polyolefin, such as polyethylene or polypropylene; a polyester, such as polyethylene terephthalate; a polyamide; a polyimide; a cellulose; and/or glass fibers or the like can be used.

The average pore diameter of the separator is not particularly limited, and is, for example, about 0.01 to 5 µm.

The thickness of the separator is not particularly limited, and is, for example, about 10 to 100 µm.

The porosity of the separator is not particularly limited, and is, for example, 40% to 80% by volume, and preferably 50% to 70% by volume.

### (Electrolyte)

The electrolyte contains cations and anions. The electrolyte preferably has lithium ion conductivity. In such an electrolyte, the cations include at least lithium ions. As the electrolyte, a nonaqueous electrolyte is preferably used.

As the nonaqueous electrolyte, for example, an electrolyte (organic electrolyte) in which a salt (lithium salt) of a lithium ion and an anion is dissolved in a nonaqueous solvent (or organic solvent), an ionic liquid containing cations including at least lithium ions and anions, or the like is used.

The organic electrolyte may contain, in addition to the nonaqueous solvent (organic solvent) and the lithium salt, an ionic liquid and/or an additive and the like. The total content of the nonaqueous solvent and the lithium salt in the electrolyte is, for example, 60% by mass or more, preferably 75% by mass or more, and more preferably 85% by mass or more. The total content of the nonaqueous solvent and the lithium salt in the electrolyte may be, for example, 100% by mass or less or 95% by mass or less. These lower limits and upper limits can be combined arbitrarily. The total content of the nonaqueous solvent and the lithium salt in the electrolyte may be, for example, 60% to 100% by mass or 75% to 95% by mass.

The ionic liquid is synonymous with a salt in a molten state (molten salt) and is a liquid ionic substance composed of anions and cations.

In the case where an ionic liquid is used as the electrolyte, the electrolyte may contain, in addition to the ionic liquid containing cations including at least lithium ions and anions, a nonaqueous solvent and/or an additive and the like. The content of the ionic liquid containing cations and anions in the electrolyte is preferably 60% by mass or more, and more preferably 70% by mass or more. The content of the ionic liquid containing cations and anions in the electrolyte may be 80% by mass or more or 90% by mass or more. The content of the ionic liquid in the electrolyte is 100% by mass or less.

From the viewpoint of low-temperature properties and the like, an electrolyte containing a nonaqueous solvent (organic solvent) is preferably used. From the viewpoint of suppressing decomposition of the electrolyte as much as possible, an electrolyte containing an ionic liquid is preferably used, and an electrolyte containing an ionic liquid and a nonaqueous solvent may be used.

The concentration of the lithium salt or lithium ions in the electrolyte may be appropriately selected, for example, from the range of 0.3 to 5 mol/L.

The type of anion (first anion) constituting the lithium salt is not particularly limited. Examples thereof include anions of fluorine-containing acids [e.g., fluorine-containing phosphate anions, such as a hexafluorophosphate ion; and fluorine-containing borate anions, such as a tetrafluoroborate ion], anions of chlorine-containing acids [e.g., a perchlorate ion], anions of oxoacids having an oxalate group [e.g., oxalatoborate ions, such as a bis(oxalato)borate ion (B(C₂O₄)₂⁻); and oxalatoborate ions, such as a tris(oxalato)phosphate ion (P(C₂O₄)₃⁻)], fluoroalkanesulfonate anions [e.g., a trifluoromethanesulfonate ion (CF₃SO₃⁻)], and bis(sulfonyl)amide anions.

The lithium salts may be used alone, or two or more lithium salts having different first anions may be combined for use.

Examples of the bis(sulfonyl)amide anion include a bis(fluorosulfonyl)amide anion (FSA⁻), a bis(trifluoromethylsulfonyl)amide anion (TFSA⁻), (fluorosulfonyl)(perfluoroalkylsulfonyl)amide anions [e.g., (FSO₂)(CF₃SO₂)N⁻], and bis(perfluoroalkylsulfonyl)amide anions [e.g., N(SO₂CF₃)₂⁻) and N(SO₂C₂F₅)₂⁻)]. Among these, FSA- is preferable.

The nonaqueous solvent is not particularly limited, and a known nonaqueous solvent used for lithium ion capacitors can be used. From the viewpoint of ion conductivity, examples of the nonaqueous solvent that can be suitably used include cyclic carbonates, such as ethylene carbonate, propylene carbonate, and butylene carbonate; linear carbonates, such as dimethyl carbonate, diethyl carbonate, and ethyl methyl carbonate; and cyclic carbonic acid esters, such as γ-butyrolactone. These nonaqueous solvents may be used alone or in combination of two or more.

The ionic liquid contains a molten salt of a cation and an anion (second anion). The ionic liquid may contain one molten salt or two or more molten salts constituted by different types of cations and/or second anions.

As the second anion, a bis(sulfonyl)amide anion is preferably used. The bis(sulfonyl)amide anion can be selected from those exemplified for the first anion.

The electrolyte may be either an organic electrolyte or an ionic liquid. From the viewpoint of anion intercalation and deintercalation properties into and from the second carbonaceous material included in the positive electrode active material, the anions are preferably at least one member selected from the group consisting of a fluorine-containing phosphate anion, a fluorine-containing borate anion, and a bis(sulfonyl)amide anion. The bis(sulfonyl)amide anion is preferably FSA- and/or TFSA- (in particular, FSA⁻).

The cations constituting the ionic liquid include at least a lithium ion, and may include a lithium ion (first cation) and a second cation.

The second cation is, for example, an inorganic cation different from the lithium ion, or an organic cation. Examples of the inorganic cation include the alkali metal ions other than the lithium ion (e.g., a sodium ion and a potassium ion), alkaline-earth metal ions (e.g., a magnesium ion and a calcium ion), and an ammonium ion. The second cation may be an inorganic cation, but is preferably an organic cation. The ionic liquid may contain a single second cation or may contain two or more second cations in combination.

Examples of the organic cation include nitrogen-containing onium cations, such as cations derived from aliphatic amines, alicyclic amines, and aromatic amines (e.g., quaternary ammonium cations) and cations having a nitrogen-containing heterocycle (i.e., cations derived from cyclic amines); sulfur-containing onium cations; and/or phosphorus-containing onium cations.

Among the nitrogen-containing organic onium cations, quaternary ammonium cations and those including pyrrolidine, pyridine, or imidazole as a nitrogen-containing heterocycle skeleton are particularly preferable.

Specific examples of nitrogen-containing organic onium cations include tetraalkylammonium cations, such as a tetraethylammonium cation (TEA⁺) and a methyltriethylammonium cation (TEMA⁺); a 1-methyl-1-propylpyrrolidinium cation (MPPY⁺), a 1-butyl-1-methylpyrrolidinium cation (MBPY⁺); a 1-ethyl-3-methylimidazolium cation (EMI⁺), and/or a 1-butyl-3-methylimidazolium cation (BMI⁺).

An electricity storage device according to the embodiment of the present invention can be produced, for example, through a step (a) of forming an electrode group using a positive electrode, a negative electrode, and a separator disposed between the positive electrode and the negative electrode, and a step (b) of accommodating the electrode group and the electrolyte in a cell case.

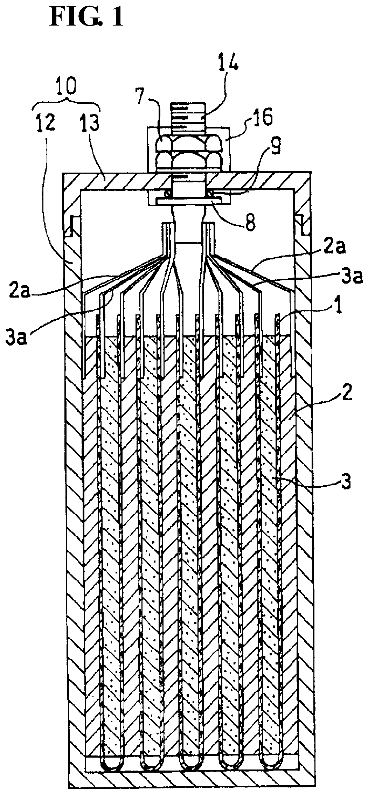

Figure 1 is a schematic longitudinal sectional view showing an electricity storage device according to an embodiment of the present invention. The electricity storage device includes a stack-type electrode group, an electrolyte (not shown), and a rectangular-shaped cell case 10 made of aluminum, which contains these components. The cell case 10 incudes a container body 12 having an opening on the top and a closed bottom, and a lid 13 which covers the opening on the top.

When the electricity storage device is assembled, first, positive electrodes 2 and negative electrodes 3 are stacked with a separator being interposed between each of the positive electrodes 2 and the negative electrodes 3. By stacking the positive electrodes 2 and the negative electrodes 3, an electrode group is formed, and the resulting electrode group is inserted into the container body 12 of the cell case 10. Then, a process is carried out in which an electrolyte is poured into the container body 12, and spaces between the separators 1, the positive electrodes 2, and the negative electrodes 3 constituting the electrode group are impregnated with the electrolyte. Alternatively, in the case where the electrolyte contains an ionic liquid, a process may be used in which the electrode group is impregnated with the electrolyte, and subsequently, the electrode group impregnated with the electrolyte is accommodated in the container body 12.

A safety valve 16 is provided in the center of the lid 13 for the purpose of releasing gas generated inside when the internal pressure of the cell case 10 rises. An external positive electrode terminal 14 is provided on the lid 13 at a position close to one side with respect to the safety valve 16 lying in the center, the external positive electrode terminal 14 passing through the lid 13, and an external negative electrode terminal is provided on the lid 13 at a position close to the other side, the external negative electrode terminal passing through the lid 13.

The stack-type electrode group includes a plurality of positive electrodes 2, a plurality of negative electrodes 3, and a plurality of separators 1 interposed therebetween. The positive electrodes 2, the negative electrodes 3, and the separators 1 are each rectangular sheet-shaped. In Fig. 1, the separator 1 is formed like a bag so as to enclose the positive electrode 2. However, the shape of the separator is not particularly limited. A plurality of positive electrodes 2 and a plurality of negative electrodes 3 are alternately arranged in the stacking direction in the electrode group.

A positive electrode lead piece 2a may be formed on one end of each positive electrode 2. By bundling the positive electrode lead pieces 2a of the positive electrodes 2 and connecting the bundle to the external positive electrode terminal 14 provided on the lid 13 of the cell case 10, the positive electrodes 2 are connected in parallel. Similarly, a negative electrode lead piece 3a may be formed on one end of each negative electrode 3. By bundling the negative electrode lead pieces 3a of the negative electrodes 3 and connecting the bundle to the external negative electrode terminal provided on the lid 13 of the cell case 10, the negative electrodes 3 are connected in parallel. The bundle of the positive electrode lead pieces 2a and the bundle of the negative electrode lead pieces 3a are desirably arranged on the right and left sides of one end face of the electrode group with a distance therebetween so as not to be in contact with each other.

Each of the external positive electrode terminal 14 and the external negative electrode terminal is columnar and is provided with a screw groove at least at a portion exposed to the outside. A nut 7 is fitted into the screw groove of each terminal, and by rotating the nut 7, the nut 7 is fixed to the lid 13. A collar portion 8 is provided on a portion of each terminal to be placed in the cell case 10, and the collar portion 8 is fixed to the inner surface of the lid 13 through a washer 9 by the rotation of the nut 7.

The electrode group is not limited to the stack type, and may be formed by winding a positive electrode and a negative electrode with a separator being interposed therebetween.

### (Charge/discharge system)

Another embodiment of the present invention covers a charge/discharge system including the electricity storage device described above, a charge control unit that controls charging of the electricity storage device, and a discharge control unit that controls discharging of the electricity storage device. In the charge control unit, at least a first upper-limit voltage V₁ and a second upper-limit voltage V₂ are set, and the second upper-limit voltage V₂ is larger than the first upper-limit voltage V₁, (V₂ > V₁). The discharge control unit may include a loading device that consumes electric power supplied from the electricity storage device.

In the positive electrode of the electricity storage device, the second reaction using the Faradaic reaction takes place at a higher potential than that at which the first reaction using the non-Faradaic reaction takes place. That is, the second reaction can be started from the potential at which polarization due to the first reaction becomes difficult. Therefore, most (e.g., 80% or more or 90% or more) of the capacity obtained at voltages equal to or less than the first upper-limit voltage V₁ is obtained by the first reaction, and most (e.g., 80% or more or 90% or more) of the capacity obtained at voltages in a range of more than the first upper-limit voltage V₁ and equal to or less than the second upper-limit voltage V₂ is obtained by the second reaction.

The first upper-limit voltage V₁ and the second upper-limit voltage V₂ are set in accordance with the first and second carbonaceous materials and the type of anions. The first upper-limit voltage V₁ is preferably 3.5 to 4.4 V, and more preferably 3.6 to 4.2 V. The second upper-limit voltage V₂ is preferably 4 to 6 V, and more preferably more than 4.2 V and equal to or less than 5.4 V. However, as described above, V₂ > V₁.

The charge control unit can charge the electricity storage device with a first charging current I_{c1} at a voltage that is equal to or less than the first upper-limit voltage V₁, and with a second charging current I_{c2} at a voltage that is more than the first upper-limit voltage V₁ and equal to or less than the second upper-limit voltage V₂. In the voltage range of the first upper-limit voltage V₁ or less, the first reaction using the non-Faradaic reaction mainly takes place, and many anions can be rapidly adsorbed to the first carbonaceous material. On the other hand, in the voltage range in which the second reaction using the Faradaic reaction takes place (i.e., more than the first upper-limit voltage V₁ and equal to or less than the second upper-limit voltage V₂), the charging reaction is slow compared with the first reaction. Accordingly, when charging is performed with the same current as the first charging current I_{c1}, polarization increases, and the utilization ratio of the second carbonaceous material decreases. By satisfying the formula I_{c2} < I_{c1}, the utilization ratio of the second carbonaceous material increases, and it is possible to improve cycle characteristics.

The first upper-limit voltage V₁ and the second upper-limit voltage V₂ in the charge control unit are also set in the discharge control unit. The discharge control unit discharges the electricity storage device with a first discharging current I_{d1} at a voltage that is equal to or less than the first upper-limit voltage V₁, and with a second discharging current I_{d2} at a voltage that is more than the first upper-limit voltage V₁ and equal to or less than the second upper-limit voltage V₂. In this case, since the anion desorption rate in the first reaction which uses the non-Faradaic reaction is higher than the anion deintercalation rate in the second reaction which uses the Faradaic reaction, the first discharging current I_{d1} is larger than the second discharging current I_{d2}. Thereby, a high output can be obtained at a voltage that is equal to or less than the first upper-limit voltage V₁.

The first charging current I_{c1} and the first discharging current I_{d1} are each preferably 10 to 70 C, and more preferably 20 to 60 C. The second charging current I_{c2} and the second discharging current I_{d2} are each preferably less than 10 C (e.g., 0.1 to 8 C), and more preferably 0.2 to 5 C. Note that 1 C is a current value with which, when a cell having a rated capacity is subjected to constant-current discharging, discharging is completed in one hour.

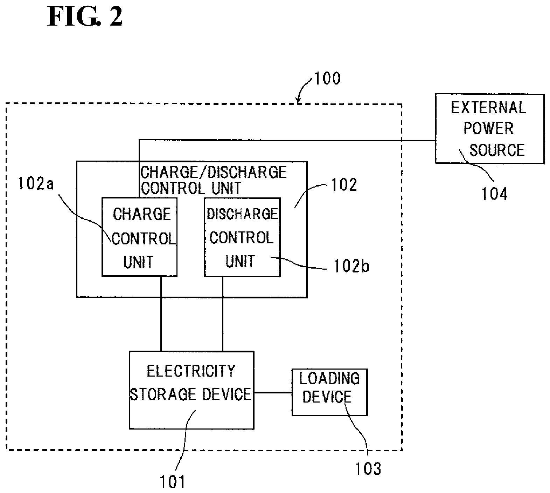

Figure 2 is a schematic diagram showing a charge/discharge system according to an embodiment of the present invention.

A charge/discharge system 100 includes an electricity storage device 101, a charge/discharge control unit 102 that controls charging and discharging of the electricity storage device 101, and a loading device 103 that consumes electric power supplied from the electricity storage device 101. The charge/discharge control unit 102 includes a charge control unit 102a that controls the current and/or the voltage and the like when the electricity storage device 101 is charged, and a discharge control unit 102b that controls the current and/or the voltage and the like when the electricity storage device 101 is discharged. The charge control unit 102a is connected to an external power source 104 and the electricity storage device 101, and the discharge control unit 102b is connected to the electricity storage device 101. The loading device 103 is connected to the electricity storage device 101.

In the charge control unit 102a, a first upper-limit voltage V₁ and a second upper-limit voltage V₂ are set, and in the discharge control unit 102b, a first upper-limit voltage V₁ and a second upper-limit voltage V₂ are also set.

In the charge/discharge system according to the embodiment of the present invention, charging and discharging can be performed using a mode (first mode) that uses a first reaction (non-Faradaic reaction) and a mode (second mode) that used a second reaction (Faradaic reaction). Depending on the intended use of the electricity storage device, the first mode or the second mode only may be used, or both the first mode and the second mode may be used. In the case where both the first mode and the second mode are used, the first mode and the second mode may be appropriately switched during use. In the first mode, a high output such as that of a capacitor can be obtained, and in the second mode, a high capacity such as that of a battery can be obtained.

### [Appendixes]

Regarding the above embodiments, the following appendixes will be further disclosed.

### (Appendix 1)

An electricity storage device including a positive electrode containing a positive electrode active material, a negative electrode containing a negative electrode active material, a separator disposed between the positive electrode and the negative electrode, and an electrolyte,
wherein the electrolyte contains anions and cations,
the cations include at least lithium ions,
the positive electrode active material includes a first carbonaceous material and a second carbonaceous material,
the first carbonaceous material realizes a capacity by means of a first reaction in which the anions are adsorbed and desorbed,
the second carbonaceous material realizes a capacity by means of a second reaction in which the anions are intercalated and deintercalated.

In such an electricity storage device, a high output can be obtained, and a high capacity can be secured.

### (Appendix 2)

In the electricity storage device according to Appendix 1, preferably,
the positive electrode contains a positive electrode mixture containing the positive electrode active material, the content of the positive electrode active material in the positive electrode mixture is 80% by mass or more,
the mass ratio of the first carbonaceous material to the second carbonaceous material is 10/90 to 70/30,
the first carbonaceous material contains activated carbon,
the second carbonaceous material contains a graphite material having an average particle diameter of 10 μm or less, and
the anions are at least one member selected from the group consisting of a hexafluorophosphate ion and FSA⁻.

In such an electricity storage device, the output and the capacity can be further improved.

### EXAMPLES

The present invention will be specifically described below on the basis of examples and comparative examples. However, it is to be understood that the present invention is not limited to the examples below.

### Example 1

An electricity storage device was produced in accordance with the procedure described below.

### (1) Production of positive electrode

### (a) Production of positive electrode current collector

A thermosetting polyurethane foamed body (porosity: 95% by volume, number of pores (cells) per inch (= 2.54 cm) of a surface: about 50, 100 mm in length x 30 mm in width x 1.1 mm in thickness) was prepared.

The foamed body was immersed in a conductive suspension containing graphite, carbon black (average particle diameter D₅₀: 0.5 µm), a resin binder, a penetrant, and an antifoamer, followed by drying to form a conductive layer on a surface of the foamed body. The total content of the graphite and the carbon black in the suspension was 25% by mass.

The foamed body having the conductive layer formed on the surface thereof was immersed in a molten-salt aluminum plating bath, and a direct current having a current density of 3.6 A/dm² was applied thereto for 90 minutes to form an aluminum layer. The mass of the aluminum layer per apparent area of the foamed body was 150 g/m². The molten-salt aluminum plating bath contained 33 percent by mole of 1-ethyl-3-methylimidazolium chloride and 67% by mole of aluminum chloride, and had a temperature of 40°C.

The foamed body having the aluminum layer formed on the surface thereof was immersed in a lithium chloride-potassium chloride eutectic molten salt at 500°C, and a negative potential of -1 V was applied thereto for 30 minutes to decompose the foamed body. The resulting aluminum porous body was taken out from the molten salt, cooled, washed with water, and dried to obtain a positive electrode current collector. The resulting positive electrode current collector had a three-dimensional network porous structure which reflected the shape of the pores of the foamed body and in which the pores were interconnected with each other. The positive electrode current collector had a porosity of 94% by volume, an average pore diameter of 550 µm, and a specific surface area (BET specific surface area) measured by a BET method of 350 cm²/g. The three-dimensional network skeleton made of aluminum had a hollow space inside, the hollow space having a shape of interconnected pores and formed by removal of the foamed body.

### (b) Production of positive electrode

An activated carbon powder (specific surface area: 2,300 m²/g, average particle diameter: about 5 µm) serving as a first carbonaceous material, a graphite powder (specific surface area:20 m²/g, average particle diameter: 3.4 µm) serving as a second carbonaceous material, acetylene black serving as a conductive assistant, PVDF (NMP solution containing PVDF in a concentration of 12% by mass) serving as a binder, and NMP serving as a dispersion medium were mixed and stirred in a mixer to prepare a positive electrode mixture slurry. The mass ratio of the components in the slurry was first carbonaceous material:second carbonaceous material:acetylene black:PVDF = 50:50:3:10.

The current collector obtained in the process (a) described above was filled with the resulting positive electrode mixture slurry, and drying was performed at 100°C for 30 minutes. The dried product was compressed in the thickness direction using a pair of rolls, and thereby a positive electrode having a thickness of 610 μm was obtained.

### (2) Production of negative electrode

### (a)Production of negative electrode current collector

A Cu coating layer (conductive layer) having a coating weight of 5 g/cm² was formed by sputtering on a surface of a thermosetting polyurethane foamed body same as that used in the production of the positive electrode current collector.

The foamed body having the conductive layer on the surface thereof, which was used as a workpiece, was immersed in a copper sulfate plating bath, and a direct current having a cathode current density of 2 A/dm² was applied thereto to form a Cu layer on the surface. The copper sulfate plating bath contained 250 g/L of copper sulfate, 50 g/L of sulfuric acid, and 30 g/L of copper chloride, and had a temperature of 30°C.

The foamed body having the Cu layer formed on the surface thereof was heat-treated in an air atmosphere at 700°C to decompose the foamed body, and then firing was performed in a hydrogen atmosphere to reduce the oxide film formed on the surface. Thereby, a copper porous body (negative electrode current collector) was obtained. The resulting negative electrode current collector had a three-dimensional network porous structure which reflected the shape of the pores of the foamed body and in which the pores were interconnected with each other. The negative electrode current collector had a porosity of 92% by volume, an average pore diameter of 550 µm, and a BET specific surface area of 200 cm²/g. The three-dimensional network skeleton made of copper had a hollow space inside, the hollow space having a shape of interconnected pores and formed by removal of the foamed body.

### (b) Production of negative electrode

A synthetic graphite powder serving as a negative electrode active material, acetylene black serving as a conductive assistant, PVDF serving as a binder, and NMP serving as a dispersion medium were mixed with each other to prepare a negative electrode mixture slurry. The mass ratio of the graphite powder, acetylene black, and PVDF was 100:0.3:1.

The current collector obtained in the process (a) described above was filled with the resulting negative electrode mixture slurry, and drying was performed at 100°C for 30 minutes. The dried product was rolled using a pair of rolls to produce a negative electrode having a thickness of 130 µm.

In the processes (1) and (2), the filling amounts of the positive electrode mixture and the negative electrode mixture were controlled so that the chargeable capacity of the negative electrode after pre-doping was about 2 times the capacity of the positive electrode.

### (3) Production of lithium electrode

A lithium electrode was produced by pressure-bonding a lithium foil (thickness: 50 µm) to one surface of a punched copper foil (thickness: 20 µm, opening diameter: 50 µm, opening ratio: 50%, 2 cm x 2 cm) serving as a current collector. A nickel lead was welded to the other surface of the current collector of the lithium electrode.

### (4) Production of electricity storage device

Each of the positive electrode and the negative electrode obtained in (1) and (2) was cut into a size of 1.5 cm x 1.5 cm, and a portion of the mixture having a width of 0.5 mm extending along one side was removed to form a current collector-exposed portion. An aluminum lead was welded to the current collector-exposed portion of the positive electrode and a nickel lead was welded to the current collector-exposed portion of the negative electrode. In each of the produced positive electrode and negative electrode, the area of a portion where the mixture was present was 1.5 cm².

The positive electrode and the negative electrode were stacked on each other with a cellulose separator (thickness: 60 µm) being interposed therebetween, thereby producing an electrode group consisting of a single cell. Furthermore, the lithium electrode was disposed on the negative electrode side of the electrode group with a polyolefin separator (a stacked body of a polyethylene microporous membrane and a polypropylene microporous membrane) being interposed therebetween, and the resulting stacked product was placed in a cell case made of an aluminum laminate sheet.

Subsequently, an electrolyte was poured into the cell case so that the positive electrode, the negative electrode, and the separator were impregnated with the electrolyte. As the electrolyte, a solution obtained by dissolving LiPF₆ serving as a lithium salt in a concentration of 1.0 mol/L in a mixed solvent containing ethylene carbonate and diethyl carbonate in a volume ratio of 1:1 was used. Lastly, the cell case was sealed while reducing the pressure using a vacuum sealer.

The lead of the negative electrode and the lead of the lithium electrode were connected to a power source outside the cell case. The cell in this state was left to stand in a thermostatic chamber at 30°C for a predetermined time so that the temperature of the electrolyte became the same temperature as the thermostatic chamber. Subsequently, charging was performed between the negative electrode and the lithium electrode at a current of 0.2 mA/cm² up to a potential of 0 V with respect to metallic lithium. Then, by discharging 2.3 mAh at a current of 0.2 mA/cm², the negative electrode active material was pre-doped with lithium, thereby producing an electricity storage device (A1). The design capacity of the electricity storage device A1 was about 1.5 mAh/cm² at the time of charging of 5.0 V.

The resulting electricity storage device was charged at a current of 1 mA/cm² until the voltage reached the upper-limit voltage 5.0 V, and discharged at a current of 1 mA/cm² until the voltage reached 2.2 V. This charge-discharge cycle was repeated ten times, and the discharge capacity C (mAh) at the time of discharging in the 10th cycle was obtained.

### Examples 2 to 4 and Comparative Examples 1 and 2

Positive electrodes were produced as in Example 1 except that the mass ratio of the first carbonaceous material to the second carbonaceous material was changed to the values shown in Table 1. Electricity storage devices were produced as in Example 1 except that the resulting positive electrodes were used, and evaluation was performed.

The results of the examples and the comparative examples are shown in Table 1. Note that the electricity storage devices A1 to A4 correspond to Examples 1 to 4 and B1 and B2 correspond to Comparative Examples 1 and 2.

**[Table 1]**

| | Mass ratio of carbonaceous materials (first/second) | Discharge capacity (mAh/g) |
|---|---|---|
| B1 | 0/100 | 2.4 |
| A2 | 10/90 | 2.2 |
| A3 | 30/70 | 1.9 |
| A1 | 50/50 | 1.6 |
| A4 | 70/30 | 1.4 |
| B2 | 100/0 | 0.4 |

As shown in Table 1, in each of A1 to A4 (examples) in which the positive electrode containing both the first carbonaceous material and the second carbonaceous material was used, since it was possible to perform charging and discharging up to a higher potential, a high capacity was obtained. It is confirmed that in charging and discharging in the voltage range of 2.2 to 4.2 V, a high output, as in a capacitor, can be obtained.

In B1 (comparative example) in which the positive electrode containing the second carbonaceous material only was used, although a high capacity was obtained as in the examples, a high output was not obtained in charging and discharging in the range of 2.2 to 4.2 V. In B2 (comparative example) in which the positive electrode containing the first carbonaceous material only was used, although a high output was secured, the capacity was low.

### Industrial Applicability

In the electricity storage device according to an embodiment of the present invention, it is possible to obtain a high output and a high capacity. Accordingly, the electricity storage device is applicable to various uses requiring such properties, for example, electricity storage apparatuses for solar power generation or wind power generation, emergency power sources, instantaneous voltage drop compensating power sources, and automotive power sources.

### Reference Signs List

- 1: separator
- 2: first electrode
- 2a: electrode lead piece
- 3: second electrode
- 3a: electrode lead piece
- 7: nut
- 8: collar portion
- 9: washer
- 10: cell case
- 12: container body
- 13: lid
- 14: external electrode terminal
- 16: safety valve
- 100: charge/discharge system
- 101: electricity storage device
- 102: charge/discharge control unit
- 102a: charge control unit
- 102b: discharge control unit
- 103: loading device
- 104: external power source

## Claims

1. An electricity storage device comprising a positive electrode containing a positive electrode active material, a negative electrode containing a negative electrode active material, a separator disposed between the positive electrode and the negative electrode, and an electrolyte,
wherein the electrolyte contains anions and cations,
the cations include at least lithium ions,
the positive electrode active material includes a first carbonaceous material and a second carbonaceous material,
the first carbonaceous material realizes a capacity by means of a first reaction in which the anions are adsorbed and desorbed,
the second carbonaceous material realizes a capacity by means of a second reaction in which the anions are intercalated and deintercalated.

2. The electricity storage device according to Claim 1, wherein the positive electrode contains a positive electrode mixture containing the positive electrode active material,
the content of the positive electrode active material in the positive electrode mixture is 80% by mass or more, and
the mass ratio of the first carbonaceous material to the second carbonaceous material is 10/90 to 70/30.

3. The electricity storage device according to Claim 1 or 2, wherein the first carbonaceous material contains activated carbon.

4. The electricity storage device according to any one of Claims 1 to 3, wherein the second carbonaceous material contains a graphite material having an average particle diameter of 10 μm or less.

5. The electricity storage device according to any one of Claims 1 to 4, wherein the second carbonaceous material contains nanoporous carbon having a specific surface area of 800 to 2,500 m²/g.

6. The electricity storage device according to any one of Claims 1 to 5, wherein the anions are at least one member selected from the group consisting of a fluorine-containing phosphate anion, a fluorine-containing borate anion, and a bis(sulfonyl)amide anion.

7. A charge/discharge system comprising an electricity storage device, a charge control unit that controls charging of the electricity storage device, and a discharge control unit that controls discharging of the electricity storage device,
wherein the electricity storage device includes a positive electrode containing a positive electrode active material, a negative electrode containing a negative electrode active material, a separator disposed between the positive electrode and the negative electrode, and an electrolyte,
the electrolyte contains anions and cations,
the cations include at least lithium ions,
the positive electrode active material includes a first carbonaceous material and a second carbonaceous material,
the first carbonaceous material realizes a capacity by means of a first reaction in which the anions are adsorbed and desorbed,
the second carbonaceous material realizes a capacity by means of a second reaction in which the anions are intercalated and deintercalated,
in the charge control unit, at least a first upper-limit voltage V₁ and a second upper-limit voltage V₂ are set, the second upper-limit voltage V₂ being larger than the first upper-limit voltage V₁,
90% or more of the capacity obtained at voltages equal to or less than the first upper-limit voltage V₁ is obtained by the first reaction, and
90% or more of the capacity obtained at voltages in a range of more than the first upper-limit voltage V₁ and equal to or less than the second upper-limit voltage V₂ is obtained by the second reaction.

8. The charge/discharge system according to Claim 7, wherein the first upper-limit voltage V₁ is 3.5 to 4.4 V, and
the second upper-limit voltage V₂ is 4 to 6 V.

9. The charge/discharge system according to Claim 7 or 8, wherein the charge control unit charges the electricity storage device with a first charging current I_{c1} at a voltage that is equal to or less than the first upper-limit voltage V₁, and with a second charging current I_{c2} at a voltage that is more than the first upper-limit voltage V₁ and equal to or less than the second upper-limit voltage V₂, the first charging current I_{c1} being larger than the second charging current I_{c2}; and
the discharge control unit discharges the electricity storage device with a first discharging current I_{d1} at a voltage that is equal to or less than the first upper-limit voltage V₁, and with a second discharging current I_{d2} at a voltage that is more than the first upper-limit voltage V₁ and equal to or less than the second upper-limit voltage V₂, the first discharging current I_{d1} being larger than the second discharging current I_{d2}.
